# EUROPEAN PATENT APPLICATION

(11) **EP 4 721 716 A1**
(43) Date of publication of application: **08.04.2026**
(21) Application number: 24740194.6
(22) Date of filing: 31.05.2024
(51) Int. Cl.: A61G 5/00, A61G 5/10, B62K 13/00, B62K 3/16, B62K 5/10, B62K 13/04

(54) **FRAMEWORK WITH TILTING WHEELS FOR USE AS A WHEELCHAIR OR A TRANSPORT CART, COUPLABLE TO THE FORK OF A VEHICLE, PREFERABLY OF A BICYCLE**

(30) Priority: 01.06.2023 WO PCT/ES2023/070366
(71) Applicant: TAVIL IND S.A.U., 17854 Sant Jaume de Llierca (Girona) (ES)
(72) Inventor: VILANOVA ALZAMORA, Manuel, 17854 Sant Jaume de Llierca (GIRONA) (ES)
(74) Representative: Pons IP
(86) International application number: PCT/ES2024/070338
(87) International publication number: WO 2024/246402

(57) **Abstract**

The present invention relates to a framework with tilting wheels (4, 4') coupleable to the fork of a vehicle, preferably of a bicycle, applicable for moving a wheelchair or transport cart, incorporating a support structure (1) on which there is coupled the fork (2), an upper rotating bar (5) that tilts about the support structure (1), respective tilting arms (3, 3') linked to each of the wheels (4, 4') and to the support structure (1), as well as respective side tie rods (6) which pull the tilting arms (3, 3') when the rotating bar (5) turns when turning and/or tilting the fork (2). Likewise, the present invention relates to a wheelchair which is provided with a chassis (9) on which there is assembled a seat (9) and a backrest, integrated in the framework with tilting wheels.

## Description

### OBJECT OF THE INVENTION

The present invention relates to a framework with tilting wheels integrated into a wheelchair or cart, which is coupleable to the fork of a vehicle, preferably a bicycle, tricycle, or the like, with the purpose of facilitating the movement of the wheelchair or cart together with the bicycle for transporting goods or passengers.

The framework incorporates a mechanism that allows each of the two tilting wheels to be moved when going around a curve, reducing the turning radius and considerably facilitating the maneuverability of the bicycle coupled to the chair or cart.

The wheelchair itself having said framework integrated therein is also an object of the invention.

### BACKGROUND OF THE INVENTION

Various solutions for attaching a wheelchair to a bicycle, either conventional or particularly designed for that purpose, are known in the state of the art.

For example, document DE 102005053412 (A1) describes a tricycle for a wheelchair user and a driver, consisting of a standard bicycle, a standard wheelchair, and a special fastening, wherein the bicycle and the wheelchair can also be used independently. To connect the bicycle and the wheelchair, this document suggests using a steering axle receiving bearing and a straight oval tube that is connected by means of a connecting flange to the rear half of the bicycle. This resulting tricycle presents significant problems in terms of maneuvering and going around a curve, resulting in a dangerous vehicle.

Document DE19652176 (A1) relates to a three-wheeled multi-purpose vehicle for the selective transport of people, particularly people with walking disabilities, consisting of a two-wheeled front part and a one-wheeled rear part provided with a bicycle traction mechanism and a connecting mechanism between the front and rear parts.

Document US6341791A describes a wheelchair and bicycle combination assembly, attached by coupling means comprising a coupling bar having a first end integrally attached to the bicycle frame and positioned at a juncture of the seat tube and the support bar, wherein the coupling bar is a telescopic bar that can be extended in a sliding manner.

Document US4770431 (A) relates to bicycles coupled to wheelchairs, and more particularly to accessories adapted to couple wheelchairs in order to facilitate maneuverability. More specifically, the solution comprises connecting the bicycle fork to a transition support comprised in the bicycle frame.

When riding a conventional bicycle, the body must lean in the direction of the curve, the torso must be straight in line with the inclination of the curve, thus moving the center of gravity towards its apex to counteract the inertia or centrifugal force that throws the rider out, while the friction of the wheels stops the rider.

**In** all the above solutions, the rigid connection mode between the bicycle frame and the two front wheels, which in turn move together with the handlebars and with a single integral turning radius, obviously do not allow performing the usual maneuver with the wheelchair at the front as ballast and the front wheels of which determine the turning radius, resulting in significant safety problems, tipping risks, and maneuverability problems.

Document FR3040363 describes a front end of a pedal bicycle comprising two tiltable front wheels associated with a deformable parallelogram mechanism, including at least two substantially horizontal rigid bodies rotatably attached with respect to a substantially vertical central rigid body, as well as having two side rigid bodies, which are substantially vertical and respectively attached to the wheels. At least one of the substantially horizontal rigid bodies includes fixing means intended for securing a module for transporting a load. In this case, the tilting of the central rigid body of the front end of the bicycle causes the articulated tilting of the deformable parallelogram mechanism, and therefore the same parallel inclination of the wheels in the same plane.

Some tricycle solutions designed for transporting loads on the rear axle, which have two suspended rear wheels and a differential on the rear axle which transmits the pedal force to both wheels simultaneously, even if they tilt or are at different heights, are also known.

### DESCRIPTION OF THE INVENTION

The present invention relates to a framework with tilting wheels coupleable to the fork of a vehicle, preferably of a bicycle or the like, which is intended for moving a wheelchair or a transport cart, such that it facilitates maneuverability and going around a curve.

The vehicle on which the framework is coupled must have, fundamentally, a chassis which is mounted on at least one rear wheel, a seat, turning handlebars, and a front fork, which vehicle can be a bicycle, an electric bicycle, a motorcycle, or others which have been stripped of the front wheel, keeping its axle.

The framework with tilting wheels object of the present invention fundamentally comprises:
- a support structure incorporating elements that facilitate the coupling of the fork, as well as a central upper axis of rotation and respective lower side hinges,
- a floating upper rotating bar provided with two opposite ends that tilts about the axis of rotation of the support structure,
- respective wheels, each of them being located on one side of the support structure,
- respective tilting arms, specifically a first and a second tilting arms, each of them being operatively attached at a distal end to the turning shaft of one of the wheels and at another proximal end to articulation shafts of the support structure,
- respective side tie rods, each of them being coupled at one end, in an articulated manner, to each of the opposite ends of the rotating bar and at the other end thereof to one of the tilting arms in the proximity of the axis of rotation of the wheel.

According to this configuration, when the fork of the vehicle is in a vertical position and the vehicle travels straight without tilting, the rotating bar is in a horizontal position, the tie rods do not move, and the tilting arms on which the wheels are assembled remain in a substantially horizontal position, with the wheels in an essentially vertical position.

However, when the fork is turned and/or tilted when attempting to make a curved trajectory with the vehicle, then the structure is tilted integrally with the fork with respect to the rotating bar, the rotating bar as a result of its floating nature tries to maintain its horizontality, drives one of the side tie rods which in turn causes the upward tilt of the first tilting arm, and pushes the other side tie rod causing the downward tilt of the second tilting arm, such that the wheel attached to the first tilting arm is moved to a position that is further back with respect to the initial position, while the wheel attached to the second tilting arm is moved to a position that is more to the front with respect to the initial position.

As a result, the wheel closest to the turn is moved slightly backwards, towards the support structure with a more acute turning angle with respect to the horizontal than the turning angle of the opposite wheel which in turn is slightly moved to a position that is more to the front, considerably improving going around a curve and maneuverability when making turns, unlike what occurs in the more rigid mechanisms of the state of the art, such as the mechanism shown in document FR3040363 mentioned above.

The support structure incorporates stops, such as elastic bands, which limit the movement of the tilting arms to prevent excessive movement of the wheels.

On the other hand, there is, linked to the lower part of the support structure, a support plate provided with a receptacle intended for receiving a lower bar that joins the ends of the fork to facilitate the fitting of the fork, and there are, linked to the upper part of the support structure, respective articulated barriers that open and close to secure the fixing of the fork.

Likewise, it has been envisaged that respective rods intended for facilitating the coupling of a chassis of a wheelchair or of a chassis of a cart transporting people, animals, or goods are prolonged from the support structure.

Another object of the invention relates to a wheelchair integrating said framework with tilting wheels, which chair incorporates a chassis on which there are mounted the seat and the backrest, and optionally side protectors intended for covering the tilting wheels.

In the chassis of the wheelchair, it has been envisaged the incorporation of tubular portions that are coupled in the rods of the framework, allowing the chassis of the chair to adopt two possible positions, an adjacent position in which the chassis is practically in contact with the support structure of the framework for the situation in which the wheelchair is used coupled to the vehicle, and another distant position in which the chassis is separated from the support structure of the framework in the situation in which the wheelchair is used separated from the vehicle for the independent use thereof. The free ends of the rods have a locking element, such as a pin, for example.

Linked to the chassis of the wheelchair at the upper portion thereof is a hook which is intended for fixing the position of the framework with the handlebars of the vehicle, preventing it from tilting, as well as having respective clamps that secure the linkage of the framework to the handlebars, in this case the wheelchair is coupled to the vehicle. Likewise, associated with the chassis of the chair at the upper portion thereof are respective grip handles for the person riding the vehicle, a brake lever is assembled on a handle, and it has been envisaged to have brakes associated with said lever that act on brake discs linked to the wheels.

On the other hand, the framework has a locking device linked to the movement of the hook that determines the locking of the rotating bar when it is desired that the framework does not tilt in the parked position.

### DESCRIPTION OF THE DRAWINGS

To complement the description that is being made and in order to help make the features of the invention more readily understandable, according to a preferred practical exemplary embodiment thereof, a set of drawings is attached as an integral part of said description wherein, for illustrative and non-limiting purposes, the following has been represented:
Figure 1 shows an exploded view of the elements making up the framework with tilting wheels, in which the fork and the handlebars of the vehicle, in this case of a bicycle, as well as the chassis of a wheelchair coupleable to the framework have also been depicted.
Figure 2 shows a perspective view of the wheelchair coupled to the framework with tilting wheels which is in turn coupled to the fork and the handlebars of a bicycle.
Figure 3 shows a front view of the wheelchair coupled to the tilting framework, which is in turn coupled to the fork and the handlebars of a bicycle in a tilted position.
Figure 4 shows a detailed view of the framework with tilting wheels coupled to the bicycle when the bicycle is tilted in the direction of a curve.
Figure 5 shows a perspective view in which the chassis of the wheelchair assembled on the framework with tilting wheels coupled to a bicycle can be seen.
Figure 6 shows a perspective view of the tilting framework coupled to a bicycle with a transport cart mounted thereon.
Figure 7 shows a plan view of the solution shown in Figure 3.
Figure 8 shows a side view of the solution shown in Figure 3 in which the hook is raised in a free circulation position.
Figure 9 shows the same view as Figure 8 in which the hook is in a lower position, preventing the wheels from tilting.
Figure 10 shows a detailed view of the pulley which is linked to the hook and by means of a cable to the locking device which is not depicted.
Figure 11 shows a view of an alternative embodiment of the support structure in which its side columns are formed by telescopic tubes and damping means, and it can be seen that the frame incorporates a torsion bar between the tilting arms.

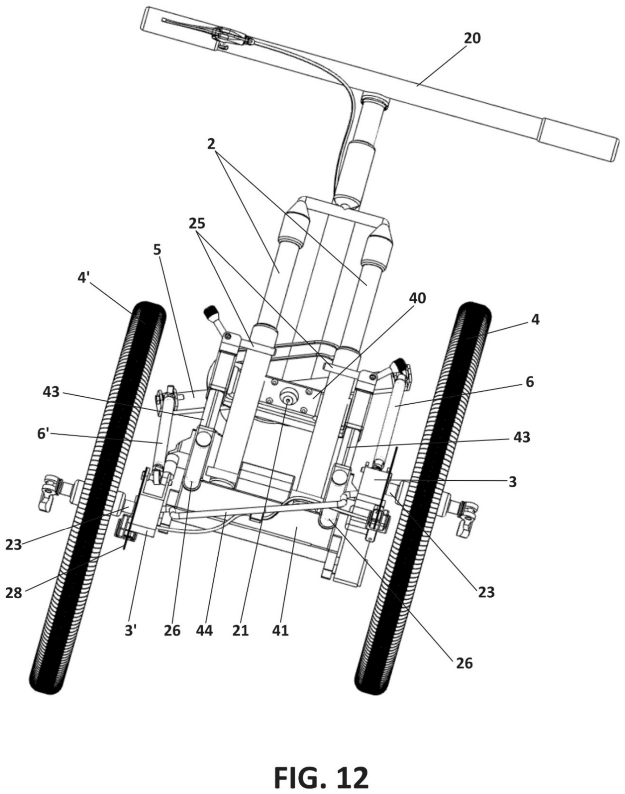

Figure 12 shows a detailed view of the framework with tilting wheels coupled to the bicycle when the bicycle is tilted in the direction of a curve, for the case in which it incorporates the telescopic tubes and damping means and the torsion bar described in Figure 11.

### PREFERRED EMBODIMENT OF THE INVENTION

A preferred embodiment of the framework with tilting wheels constituting the object of this invention is described below in view of the figures.

The framework with tilting wheels is coupleable to a vehicle, in this case the application thereof for coupling to a bicycle provided with a frame (11), handlebars (20), and a front fork (2) from which the front wheel has been removed, has been depicted.

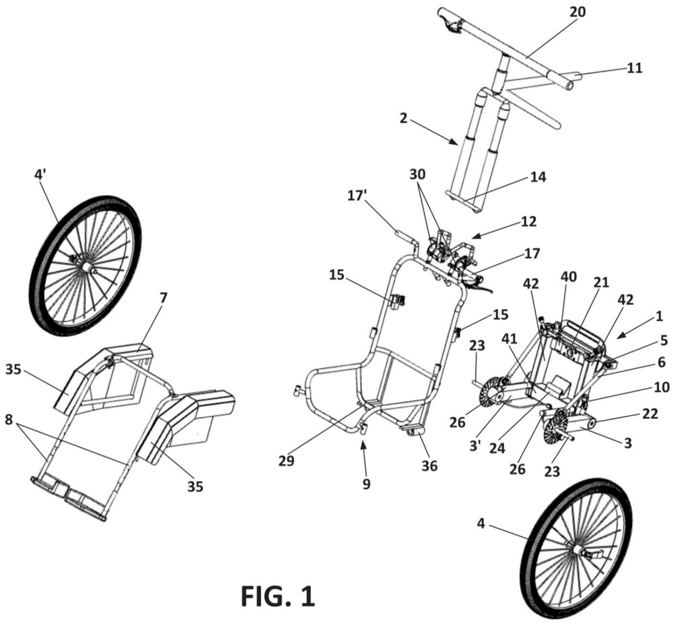

As shown in Figure 1, the framework with tilting wheels fundamentally comprises a support structure (1) on which the fork (2) of the bicycle is coupled, and a first and second wheels (4, 4') on which the support structure (1) is assembled through other elements that will be described below.

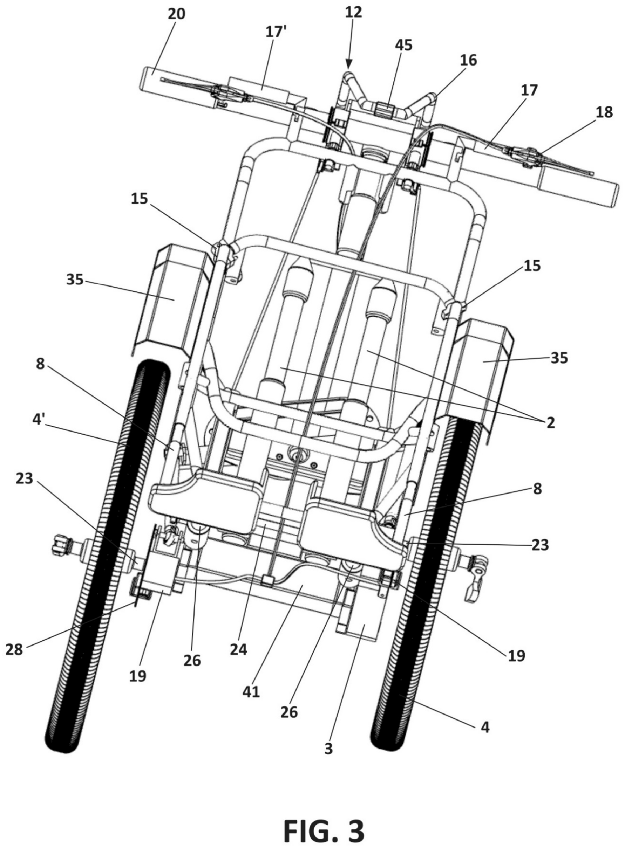

Figure 1 shows that the support structure (1) has a central upper axis of rotation (21) and has respective lower side hinges (22), and that the framework further comprises a floating upper rotating bar (5) provided with two opposite ends that tilts about the axis of rotation (21) of the support structure (1), and the framework also comprises two respective tilting arms (3, 3'), consisting of a first tilting arm (3) and a second tilting arm (3'), each of them being operatively linked at a distal end to each of the wheels (4, 4') through the turning shaft (23) and brake discs (28), shown in Figure 3, linked to the wheels (4, 4'), and at another proximal end to one of the lower side hinges (22) of the support structure (1).

Figure 1 shows that the support structure (1) comprises an upper longitudinal member (40) provided with a central axis of rotation (21), a lower longitudinal member (41) at the ends of which there are arranged respective articulation shafts (22), and respective side columns (42, 43) each of them linking an end of the upper longitudinal member (40) to an end of the lower longitudinal member (41) of the same vertical.

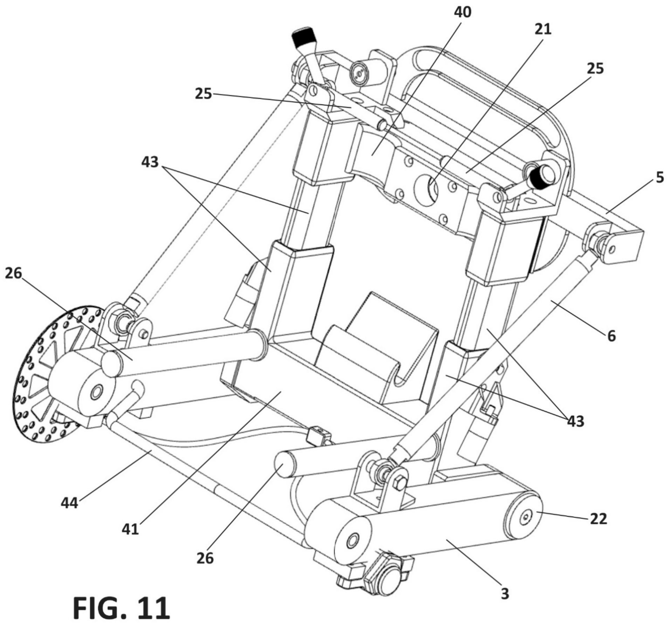

The side columns can be formed by rigid tubes (42) in the solution shown in Figures 1 to 9, or alternatively they can be formed by respective telescopic tubes (43), one of them being linked to the lower longitudinal member (41) and the other to the upper longitudinal member (40), and damping means between both telescopic tubes, as shown in Figure 11.

The support structure (1) also has a central support plate (24) linked to the lower longitudinal member (41) provided with a receptacle intended for receiving a lower rod (14) which facilitates the fitting of the fork (2).

On the other hand, the framework comprises respective tilting arms (3, 3'), which tilt with respect to the support structure (1), consisting of a first tilting arm (3) and a second tilting arm (3') that are provided with distal and proximal ends, wherein each of the tilting arms (3, 3') is coupled at its proximal end, with tilting possibility, to each of the articulation shafts (22) of the lower longitudinal member (41), and wherein each of the distal ends thereof is linked to a turning shaft (23) about which each of the wheels (4, 4') turns.

The framework also has a floating upper rotating bar (5) provided with two opposite ends that tilts about the axis of rotation (21) of the upper longitudinal member (40) of the support structure, as well as incorporates respective side tie rods (6), each of them being coupled at one end, in an articulated manner, to each of the opposite ends of the rotating bar (5) and linked at the other end thereof to one of the tilting arms (3, 3'), in the proximity of the turning shaft (23), assembled in such a way that when the support structure (1) is turned and/or tilted in a curved trajectory, the rotating bar (5) tilts, one of the side tie rods (6) causes the upward tilt of the first tilting arm (3), and the other side tie rod (6) causes the downward tilt of the second tilting arm (3').

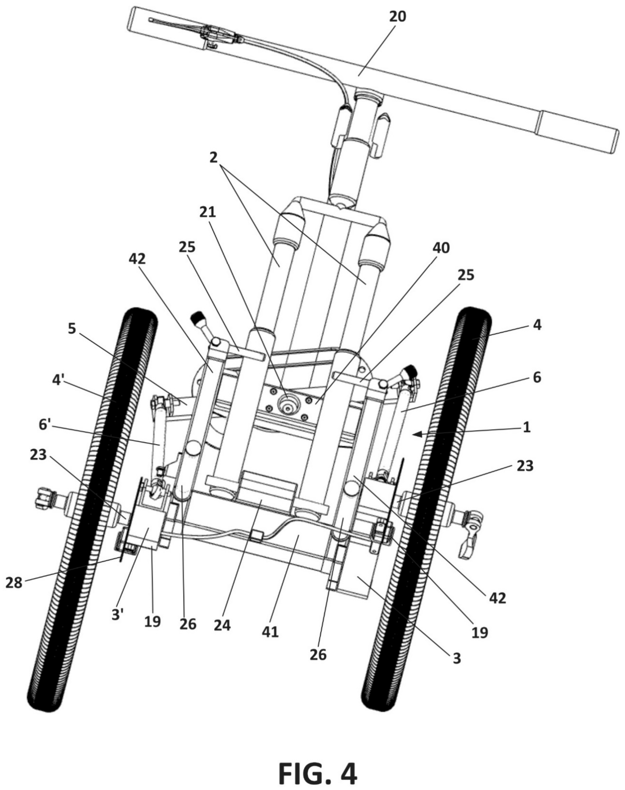

Figure 4 depicts the situation in which the fork (2) is turned and/or tilted when attempting make a curved trajectory with the vehicle. In this situation, the support structure (1) is tilted integrally with the fork (2), the rotating bar (5) hinges with respect to the axis of rotation (21), pulls one of the side tie rods (6) that in turn causes the upward tilt of the first tilting arm (3), and pushes the other side tie rod (6) causing the downward tilt of the second tilting arm (3'), such that the first wheel (4) attached to the first tilting arm (3) is moved to a position that is further back with respect to the initial position, while the second wheel (4') attached to the second tilting arm (3') is moved to a position that is more to the front with respect to the initial position.

Figure 1 shows that there are, on the support structure (1), stops (10), such as elastic bands, that limit the movement of the tilting arms (3, 3') to prevent excessive movement of the wheels (4, 4').

Likewise, Figure 1 shows that there is, linked to the upper longitudinal member (40) of the support structure (1), respective articulated barriers (25) that can also be seen in Figure 4, which open and close to secure the fixing of the fork (2).

**In** the optional solution shown in Figure 11 in which the side columns of the support structure (1) are formed by respective telescopic tubes (43) and damping means, the incorporation of a torsion bar (44) linking the tilting arms (3, 3') has also been envisaged.

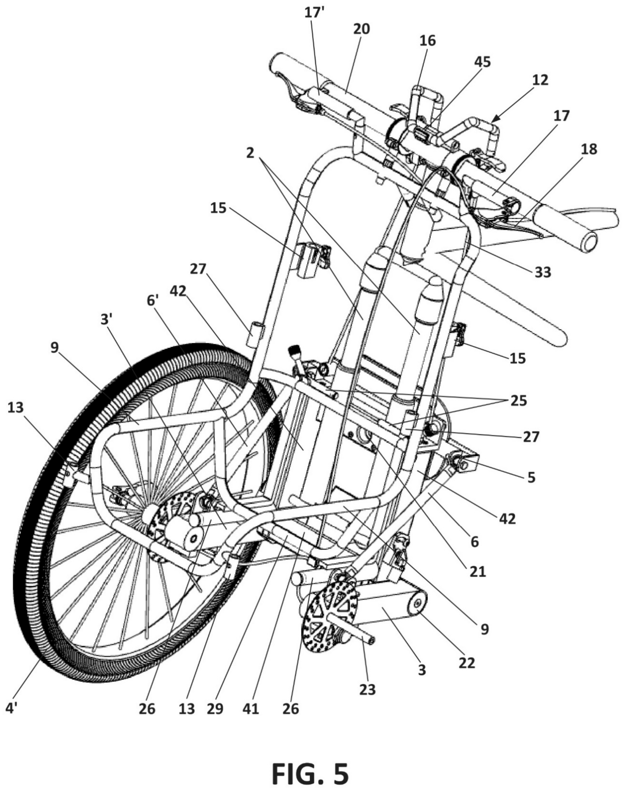

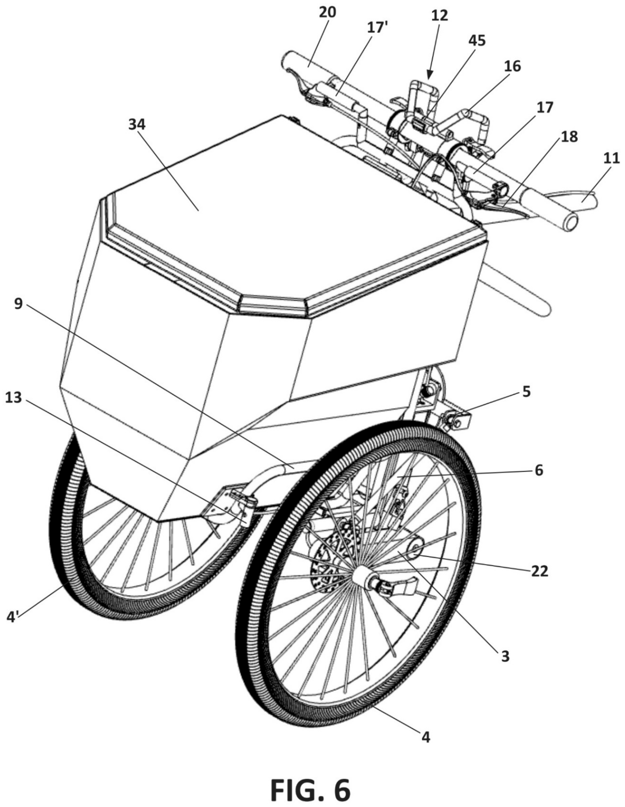

The support structure (1) also has respective rods (26) depicted in Figures 1 and 4 intended for facilitating coupling to a chassis (9) of a wheelchair, as can be seen in Figure 5, to which other elements of a wheelchair can be coupled, as can be seen in Figure 1, or to which a transport box (34) can be coupled, as can be seen in Figure 6.

Figure 5 shows that there are, on the mentioned chassis (9), first anchoring elements (15) that allow assembling a backrest (not depicted), as well as second anchoring elements (27) that allow fixing side rails (7) that incorporate side fenders (35) intended for covering the wheels (4, 4'), as can be seen in Figure 1, or these second anchoring elements (27) allow fixing the transport box (34) according to Figure 6; likewise there are, on the chassis (9), third anchoring elements (13) intended for facilitating the coupling of support feet (8) depicted in Figure 1.

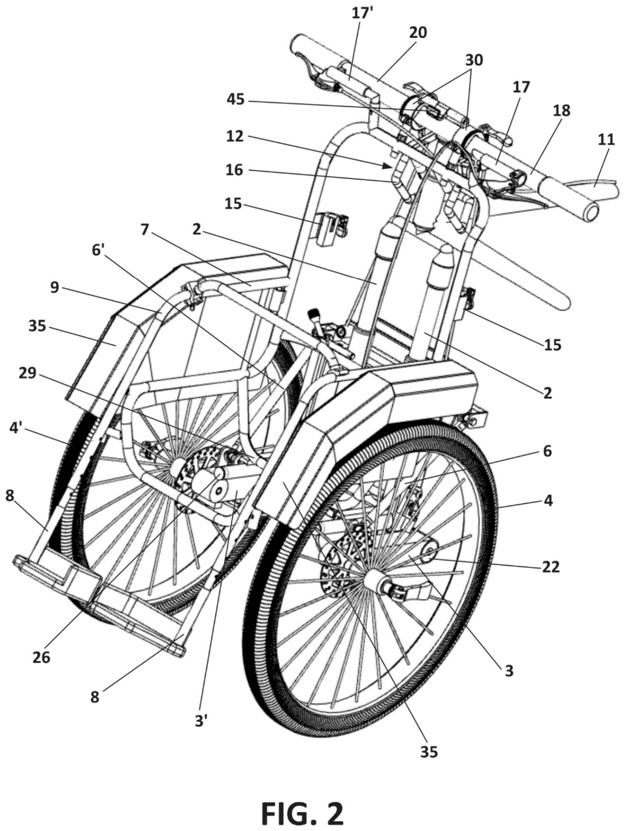

As can be seen in Figures 1 or 2, there are in the chassis (9) tubular portions (36), shown in Figure 1, in correspondence with the ends thereof which are intended for fitting into the rods (26) of the support structure (1) allowing the chassis (9) to adopt two possible positions, an adjacent position in which the chassis (9) is practically in contact with the support structure (1) for the situation in which the wheelchair is used coupled to the vehicle, and another distant position in which the chassis (9) is separated from the support structure (1) in the situation in which the wheelchair is used separated from the vehicle for the independent use thereof. The free ends of the rods (26) have a locking element such as, for example, a pin not depicted in the drawings, to prevent the chassis (9) from coming out by accident.

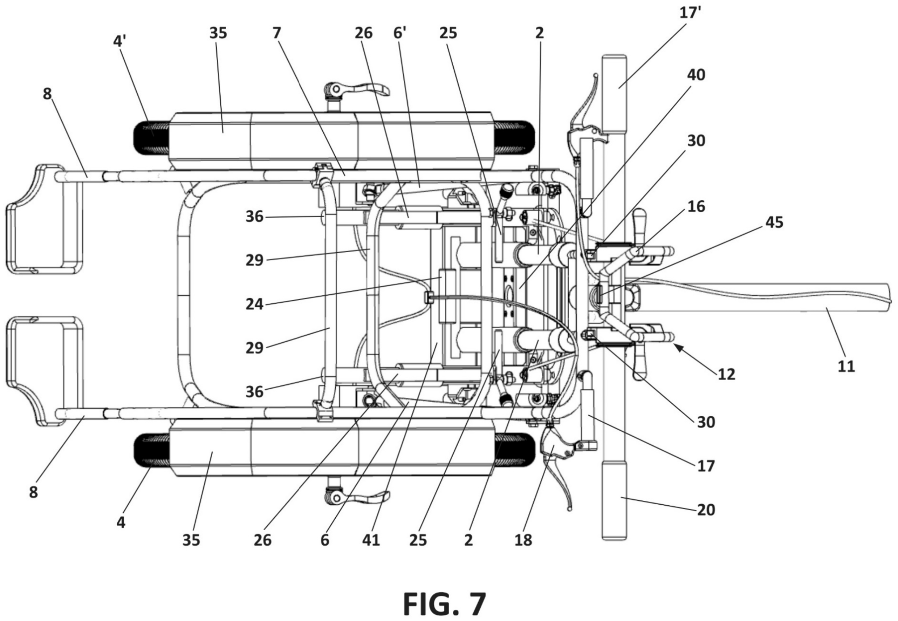

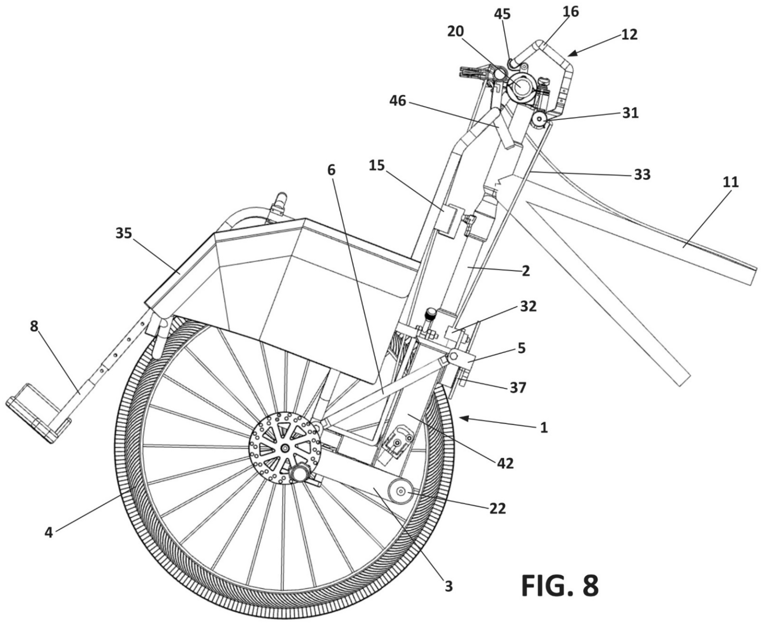

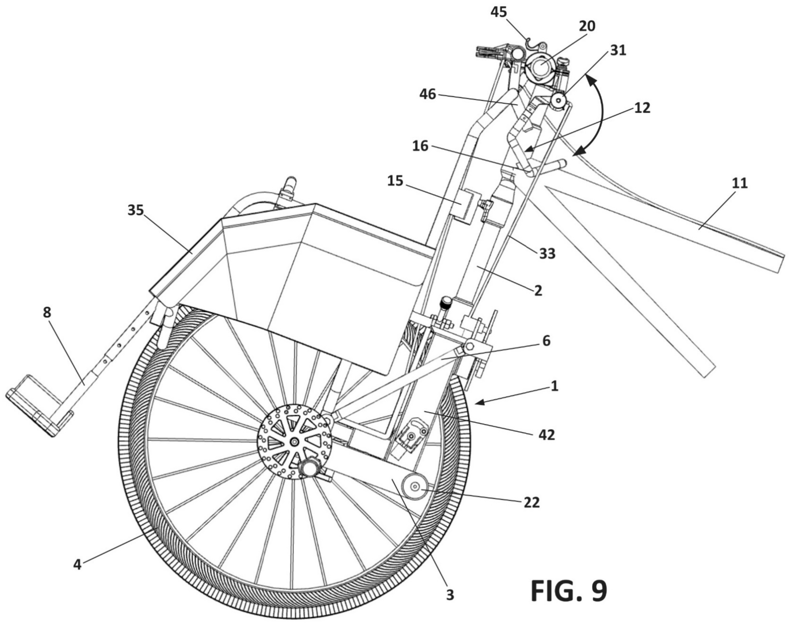

Figure 1 shows that there are, linked to the chassis (9) at the upper portion thereof, clamps (30) which secure the coupling of the chassis (9) with the handlebars (20), as can be seen in Figure 7, preventing the bicycle from separating from the chassis (9) when going over a bump, for example; it also has a hook (12) depicted in that same Figure 7 provided with lower elbows (16), which can be articulated on the clamps (30) and is designed for use thereof in two positions, as can be seen in Figures 8 and 9, an upper position depicted in Figure 8 in which linkage of the hook (12) with the frame (11) of the bicycle is not established and a lower position, depicted in Figure 9, in which the elbows (16) of the hook (12) descend on the frame (11) of the bicycle, thus securing the vertical position and therefore the stability of the assembly in a position in which the bicycle is stationary, preventing the wheels (4) from tilting.

Likewise, associated with the chassis (9) at the upper portion thereof are respective handles (17, 17'), as can be seen in Figure 5, with a brake lever (18) that is connected to a brake (19) depicted in Figures 3 or 4 located in correspondence with the brake disc (28) being assembled on the first handle (17).

On the other hand, as can be seen in Figure 8, it has been envisaged the incorporation of a locking device (32) that locks the rotating bar (5) such that the framework does not tilt to secure the bicycle and the chair in a parked position, a situation that is depicted in Figure 9. As can be seen in figure 8, the locking device (32) is linked to the support structure (1) and has a linearly movable pin (37) that locks or unlocks the rotating bar (5).

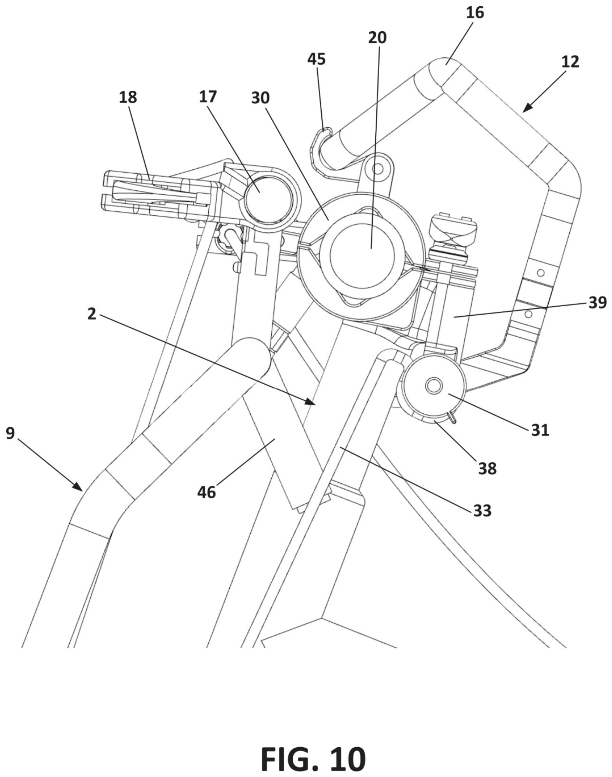

The locking device (32) is associated with one of the ends of a cable (38) provided with a sheath (33) linked around a fixed wheel (31), as can be seen in Figure 10, which is integral with an arm (39) fixed to one of the clamps (30), wherein the other end of the cable (38) is in turn fixed to the hook (12), such that when one wants to ride the vehicle, the hook (12) is raised, a situation depicted in Figure 8, which will cause the hook (12) to drive the cable (38) which in turn pulls the pin (37) of the locking device (32), unlocking the rotating bar (5) so that the framework can thus tilt.

On the other hand, as can be seen in Figure 2 or 10, it has been envisaged for there to be a bridge between the clamps (30), in which there is arranged a fastening (45) to which the hook (12) is coupled in the raised position of the hook (12) corresponding to the situation depicted in Figure 8 or 10, thereby preventing the hook (12) from being easily detached when the vehicle goes over a pothole, for example.

It is also envisaged for the chassis (9) to incorporate respective upper side extensions (46), depicted in Figures 8 to 10, which are prolonged at an angle and downwardly and constitute stops against which the column for steering the vehicle could come into contact when it tilts excessively, thereby preventing the vehicle from falling.

## Claims

1. A framework with tilting wheels for use as a wheelchair or a transport cart, coupleable to the front fork (2) of a vehicle, preferably of a bicycle, **characterized in that** it comprises
a support structure (1) comprising an upper longitudinal member (40) provided with a central axis of rotation (21), a lower longitudinal member (41) at the ends of which there are arranged respective articulation shafts (22), and respective side columns (42, 43) each of them linking an end of the upper longitudinal member (40) to an end of the lower longitudinal member (41) of the same vertical, as well as a central support plate (24) linked to the lower longitudinal member (41) provided with a receptacle intended for receiving a lower rod (14) which facilitates the fitting of the fork (2),
a floating upper rotating bar (5) provided with two opposite ends that tilts about the axis of rotation (21) of the upper longitudinal member (40) of the support structure,
a first and second wheels (4, 4'),
respective tilting arms (3, 3'), which tilt with respect to the support structure (1), consisting of a first tilting arm (3) and a second tilting arm (3') that are provided with distal and proximal ends, wherein each of the tilting arms (3, 3') is coupled at its proximal end, with tilting possibility, to each of the articulation shafts (22) of the lower longitudinal member (41), and wherein each of the distal ends thereof is linked to a turning shaft (23) about which each of the wheels (4, 4') turns,
respective side tie rods (6), each of them being coupled at one end, in an articulated manner, to each of the opposite ends of the rotating bar (5) and linked at the other end thereof to one of the tilting arms (3, 3'), in the proximity of the turning shaft (23), assembled in such a way that when the support structure (1) is turned and/or tilted in a curved trajectory, the rotating bar (5) tilts, one of the side tie rods (6) causes the upward tilt of the first tilting arm (3), and the other side tie rod (6) causes the downward tilt of the second tilting arm (3').

2. The framework according to claim 1, further comprising stops (10) assembled on the support structure (1) which limit the movement of the tilting arms (3, 3').

3. The framework according to claim 1, further comprising respective articulated barriers (25) assembled on the upper longitudinal member (40) of the support structure (1) which open and close and are intended to secure or release the fork (2).

4. The framework according to claim 1, wherein the support structure (1) further comprises respective rods (26) intended for facilitating the coupling of a chassis (9) of a wheelchair or of a transport cart (34) for goods or people.

5. The framework according to claim 1, wherein each of the side columns (42, 43) comprises a rigid tube (43).

6. The framework according to claim 1, wherein each of the side columns (42, 43) comprises respective telescopic tubes (43), one of them being linked to the lower longitudinal member (41) and the other to the upper longitudinal member (40), and damping means between both telescopic tubes (43).

7. The framework according to claim 6, further comprising a torsion bar (44) linking the tilting arms (3, 3').

8. A wheelchair comprising a chassis (9) on which there is assembled a seat and a backrest, **characterized in that** it comprises the framework with tilting wheels described in any one of claims 1 to 7.

9. The wheelchair according to claim 8, wherein the chassis (9) has tubular portions (36) in correspondence with the ends thereof intended for fitting into the rods (26) of the support structure (1) allowing the chassis (9) to adopt two possible positions, an adjacent position in which the chassis (9) is practically in contact with the support structure (1) for the situation in which the wheelchair is used coupled to the vehicle, and another distant position in which the chassis (9) is separated from the support structure (1) in the situation in which the wheelchair is used separated from the vehicle for the independent use thereof.

10. The wheelchair according to claim 8, further comprising clamps (30) linked to the upper part of the chassis (9) which are coupleable to the handlebars (20) of the vehicle.

11. The wheelchair according to claim 8, further comprising a hook (12) linked to the chassis (9) in an articulated manner which is provided with lower elbows (16) for use thereof in two positions, an upper position and a lower position in which the elbows (16) of the hook (12) descend on and are coupleable to the frame (11)of the vehicle to secure the vertical position of the framework with the vehicle in a stationary position.

12. The wheelchair according to claim 8, further comprising a first handle (17) and a second handle (17') associated with the chassis (9).

13. The wheelchair according to claim 12, further comprising a brake lever (18) assembled on the first handle (17), which is connected to brakes (19) located in correspondence with brake disks (28) associated with the wheels (4, 4').

14. The wheelchair according to claims 10 and 11, further comprising a locking device (32) which locks the rotating bar (5) such that the framework does not tilt in order to secure the vehicle and the seat in a parked position, in which the locking device (32) is linked to the support structure (1) and has a linearly movable pin (37) which locks or unlocks the rotating bar (5), and the locking device (32) is also associated with one of the ends of a cable (38) provided with a sheath (33) linked around a fixed wheel (31), which is integral with an arm (39) fixed to one of the clamps (30), wherein the other end of the cable (38) is in turn fixed to the hook (12), such that upon raising the hook (12), it drives the cable (38) which in turn pulls the pin (37) of the locking device (32), unlocking the rotating bar (5) so that the framework can thus tilt.
